(19) Europäisches Patentamt
European Patent Office
Office européen des brevets

(11) Veröffentlichungsnummer : **0 161 584**
**B1**

# (12) EUROPÄISCHE PATENTSCHRIFT

(45) Veröffentlichungstag der Patentschrift : **21.12.88**

(51) Int. Cl.⁴ : **C 08 L 29/14**, C 08 K 5/41, C 08 K 5/42, B 32 B 17/10

(21) Anmeldenummer : **85105329.8**

(22) Anmeldetag : **02.05.85**

## (54) Weichmacherhaltige thermoplastische Polyvinylbutyralformmassen mit reduziertem Haftvermögen an Glas.

(30) Priorität : **12.05.84 DE 3417653**

(43) Veröffentlichungstag der Anmeldung : **21.11.85 Patentblatt 85/47**

(45) Bekanntmachung des Hinweises auf die Patenterteilung : **21.12.88 Patentblatt 88/51**

(84) Benannte Vertragsstaaten : **AT BE DE FR GB IT NL SE**

(56) Entgegenhaltungen : **US–A– 3 249 487**

(73) Patentinhaber : **HOECHST AKTIENGESELLSCHAFT**
**Postfach 80 03 20**
**D-6230 Frankfurt am Main 80 (DE)**

(72) Erfinder : **Hermann, Hans Dieter, Dr.**
**Am Dachsbau 7**
**D-6232 Bad Soden am Taunus (DE)**
Erfinder : **Fock, Kurt, Dr.**
**Fuchshohl 21**
**D-6232 Bad Soden am Taunus (DE)**
Erfinder : **Fabian, Klaus**
**Drosselweg 11**
**D-6239 Kriftel (DE)**
Erfinder : **Ebigt, Joachim, Dr.**
**Frauenlobstrasse 76A**
**D-6000 Frankfurt am main 90 (DE)**

EP 0 161 584 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft thermoplastische, weichmacherhaltige Polyvinylbutyralformmassen, insbesondere Folien, mit reduzierter Glashaftung, die als Antihaftungsmittel das Magnesiumsalz einer Sulfonsäure oder eines Schwefelsäurehalbesters oder Gemische dieser Verbindungen enthalten, Verfahren zu ihrer Herstellung sowie ihre Verwendung zur Herstellung von Glasverbunden.

Verbundglas besteht aus zwei oder mehr Glasscheiben, die durch Kunststoff-Folien zusammengehalten werden. Die Zwischenschicht aus Kunststoff sorgt dafür, daß die Verbundscheibe bei einem Aufprall nicht durchgeschlagen wird und daß dabei keine Glassplitter wegfliegen.

Damit die Folie diese Aufgabe erfüllen kann, muß sie eine ganz definierte Haftung am Glas besitzen. Ist diese Haftung zu hoch, so löst sich das Glas bei Schlageinwirkungen überhaupt nicht von der Folie, statt dessen wird die Folie am Glassprung sofort überdehnt und reißt. Ist die Haftung zu niedrig, so lösen sich Glassplitter von der Scheibe. Nur bei richtiger Glashaftung löst sich die Folie geringfügig am Glassprung, so daß sie nicht überdehnt werden und den Stoß elastisch auffangen kann, ohne daß Glassplitter aus dem Verbund wegfliegen.

Weichmacherhaltige Polyvinylbutyralfolien haben sich seit langem als Zwischenschicht für Verbundglas bewährt. Es ist bekannt, die Haftung von Polyvinylbutyral an Glas, die normalerweise zu hoch ist, definiert herabzusetzen. Am einfachsten geschieht das durch Zusatz von Wasser. Bei stark haftenden Folien muß aber der Wassergehalt so hoch liegen (> 0,8 Gew.-%), daß dies zur Blasenbildung im Verbund führen kann.

Weiterhin ist die Einstellung der Glashaftung durch Zusatz verschiedener Alkali-, Erdalkali und anderer Metallsalze bekannt. Bewährt haben sich insbesondere alkalisch reagierende Kaliumverbindungen, wie Kaliumhydroxid und Kaliumacetat oder Kaliumsalze, wie sie z. B. in der DE-PS 1 289 261 zum Herabsetzen der Glashaftung beschrieben sind.

Häufig werden als Antihaftmittel auch Magnesiumsalze von Mono- und Dicarbonsäuren genannt. So werden in den US-Patentschriften 3 249 487 und 3 249 490 Magnesiumsalze verschiedener Carbonsäuren erwähnt.

Gute Antihaftmittel sind ferner Betaine, wie sie z. B. in der DE-OS 2 646 280 beschrieben sind, sowie andere Verbindungen mit Betainstruktur.

Die genannten Verbindungen sind teilweise sehr gut geeignet, die Glashaftung von weichgemachten Polyvinylbutyralfolien gezielt herabzusetzen und damit die Durchschlagfestigkeit von Glasverbunden aus diesen Folien zu erhöhen.

Die genannten Antihaftmittel können aber noch nicht in jeder Hinsicht befriedigen. So sind Betaine und Lecithin unter verschärften Verarbeitungsbedingungen nicht völlig stabil. Die hochwirksamen Kalium- und Magnesiumsalze sind basisch, was wiederum bei verschärften Verarbeitungsbedingungen zur Verschlechterung der Folieneigenschaften und zu Verfärbungen führen kann. Außerdem haben alle genannten Antihaftmittel miteinander gemeinsam, daß sie sich nicht leicht gleichmäßig in dem Polymerisat/Weichmachergemisch verteilen lassen. Am günstigsten ist es dabei noch, wenn man das Antihaftmittel aus wäßriger Lösung auf das Polyvinylbutyral auftrocknet. Es ist nach dem Stand der Technik aber auch möglich, die fertige Folie oder das Glas vor der Verbundglasherstellung mit einer Antihaftmittellösung zu behandeln. Ferner ist auch schon beschrieben worden, das Antihaftmittel in Lösung dem Weichmacher zuzusetzen. Regelmäßig scheidet sich das Antihaftmittel jedoch aus dem Weichmacher ab. Es bildet sich eine instabile Suspension, die meist nur kurze Zeit gebrauchsfähig bleibt.

Ziel der Arbeiten, die zu der vorliegenden Erfindung führten, war es daher, Antihaftmittel zu finden, die nicht basisch sind und von denen außerdem sich verschiedene Vertreter in der erforderlichen Konzentration entweder direkt im Weichmacher lösen oder die in Lösung dem Weichmacher zugesetzt werden können, ohne daß eine Abscheidung des Antihaftmittels eintritt.

Es wurde nun überraschenderweise gefunden, daß Magnesiumsalze von Sulfonsäuren oder von Halbestern der Schwefelsäure hervorragend als Antihaftmittel für weichmacherhaltige Polyvinylbutyralfolien geeignet sind. Da diese Salze, im Gegensatz zu den besten bisher bekannt gewordenen Antihaftmitteln, nicht basisch sind, beeinträchtigen sie auch bei verschärften Verarbeitungsbedingungen nicht die Eigenschaften der Polyvinylbutyralfolien.

Gegenstand der Erfindung ist daher ein Verfahren zur Reduzierung der Glashaftung von thermoplastischen, weichmacherhaltigen Polyvinylbutyralformmassen durch Vermischen der Formmassenbestandteile mit einem Antihaftmittel aus der Gruppe der Magnesiumsalze, dadurch gekennzeichnet, daß man als Antihaftmittel das Magnesiumsalz einer Sulfonsäure oder eines Schwefelsäurehalbesters oder Gemische dieser Verbindungen einsetzt.

Vorzugsweise kann die thermoplastische, weichmacherhaltige Polyvinylbutyralformmasse eine Folie sein.

Gegenstand der Erfindung sind daher ferner thermoplastische, weichmacherhaltige Polyvinylbutyralfolien mit erfindungsgemäß reduzierter Glashaftung, deren Verwendung zur Herstellung von Glasverbunden, sowie außerdem Glasverbunde, enthaltend thermoplastische, weichmacherhaltige Polyvinylbutyralfolie mit erfindungsgemäß reduzierter Glashaftung als Verbundschicht.

Die erfindungsgemäßen Antihaftmittel lassen sich in vielen Fällen, zumindest in Gegenwart eines

Lösungsmittels bzw. eines Löslichkeitsvermittlers, mit dem Weichmacher zu einer klaren Lösung vereinigen, die längere Zeit stabil bleibt.

Prinzipiell sind als Antihaftmittel die Magnesiumsalze aller Sulfonsäuren bzw. Schwefelsäurehalbester geeignet. Bevorzugt sind die Magnesiumsalze von Sulfonsäuren.

Bevorzugte Antihaftmittel sind die Magnesiumsalze von aliphatischen, aromatischen und cycloaliphatischen Sulfonsäuren, beispielsweise insbesondere von Benzol-, Toluol-, o-Chlorbenzol-, Naphthalin-, Cyclohexan- und Ethansulfonsäure.

Bevorzugt sind ferner die Magnesiumsalze von Schwefelsäurehalbestern aliphatischer Alkohole.

Ebenfalls bevorzugte Antihaftmittel sind die Magnesiumsalze von Sulfonsäuren, die längerkettige lineare oder verzweigte aliphatische Reste mit vorzugsweise 6 bis 30 C-Atomen enthalten, wie z. B. Hexan-, Dodecan- und Octadecansulfonsäure. Besonders bevorzugt ist das Magnesiumsalz der Dodecylbenzolsulfonsäure. Die bevorzugten Vertreter dieser Substanzklasse entsprechen der allgemeinen Formel

$$[R-(C_6H_4)_x-SO_3]_2\ Mg,$$

worin

R = ($C_6$-$C_{30}$)-Alkyl und

x = 0 oder 1 bedeutet.

Bevorzugte Antihaftmittel sind außerdem die Magnesiumsalze der Schwefelsäurehalbester von langkettigen Alkoholen, wie z. B. Isotridecylalkohol, oder der Schwefelsäurehalbester von Ethoxylierungsprodukten solcher langkettiger Alkohole oder substituierter Phenole, die einen langkettigen aliphatischen Rest mit vorzugsweise 6-18 C-Atomen enthalten. Die bevorzugten Vertreter dieser Substanzklasse entsprechen der allgemeinen Formel

$$[R-(C_6H_4)_x-(O-CH_2-CH_2)_y-OSO_3]_2\ Mg,$$

worin

R = ($C_6$-$C_{18}$)-Alkyl,

x = 0 oder 1 und

y = 0 bis 5 bedeutet.

Die erforderliche Konzentration an Antihaftmittel im Polyvinylbutyral ist variabel und richtet sich erfindungsgemäß nach der Art des Polyvinylbutyrals, insbesondere nach dessen Gehalt an Vinylalkoholeinheiten, ferner nach der Art des eingesetzten Weichmachers sowie der Qualität des verwendeten Glases. Im allgemeinen liegen die Konzentrationen bevorzugt zwischen 0,003 und 0,3 Gew.-%, bezogen auf das weichmacherhaltige Polyvinylbutyral. Besonders bevorzugt werden Antihaftmittelkonzentrationen zwischen 0,01 und 0,2 Gew.-% eingesetzt.

Als Polymerisate sind prinzipiell alle Polyvinylbutyrale verwendbar, die sich für die Herstellung von Verbundfolien eignen. Es sind dies beispielsweise solche mit einem Gehalt an Vinylalkoholeinheiten von 15 bis 28 Gew.-%, vorzugsweise 16 bis 24 Gew.-%, sowie einem Gehalt an Vinylacetateinheiten von vorzugsweise 1 bis 3 Gew.-%, jeweils bezogen auf Polyvinylbutyral. Das Polyvinylbutyral kann auf beliebige Weise hergestellt werden, z. B. nach dem Verfahren der DE-PS 2 732 717.

Die Viskosität der zu verwendenden Polymerisate liegt im üblichen Bereich. Geeignet sind insbesondere Polyvinylbutyrale, deren Viskosität in 5 gew.-%iger ethanolischer Lösung bei 23 °C zwischen 30 und 200 mPa.s liegt (gemessen nach DIN 53015).

Die Antihaftmittel können auf beliebige Weise vor oder während der Verarbeitung mit dem Polymerisat bzw. dem Polymerisat/Weichmachergemisch vermischt werden.

Verschiedene erfindungsgemäße Antihaftmittel lassen sich sehr leicht dem Weichmacher einverleiben. Dabei kann es vorteilhaft sein, das Magnesiumsalz in einem geeigneten Lösungsmittel, beispielsweise einem Alkohol, wie z. B. Methanol, einem Keton, wie z. B. Aceton, einem Ester, wie z. B. Ethylacetat, oder einem Ether, wie z. B. Dibutylether, zu lösen und die Lösung dem Weichmacher zuzusetzen.

Nach Zusatz der Antihaftmittellösung ist das Lösungsmittel meist in so geringer Konzentration im Polymerisat/Weichmachergemisch vorhanden, daß es die Folieneigenschaften nicht beeinträchtigt. Es kann aber auch vor oder bei der Verarbeitung des Folienkomponentengemisches zur Folie durch Verdampfen oder Entgasen entfernt werden.

Die verwendeten Weichmacherkomponenten sind die nach dem Stand der Technik bekannten. Vorzugsweise werden solche Weichmacher verwendet, die mit den erfindungsgemäß einzusetzenden Polymerisaten unter den einzuhaltenden Bedingungen verträglich sind. So können für Polymerisate mit bis zu ca. 21-22 Gew.-% eingebauten Vinylalkoholeinheiten z. B. Ester des Di-, Tri- und Tetraethylenglykols mit aliphatischen linearen oder verzweigten Carbonsäuren mit 5-10 C-Atomen oder auch Ester der Phthalsäure mit Alkoholen von 4-10 C-Atomen verwendet werden. Bei Polymerisaten mit höheren Anteilen an Vinylalkoholeinheiten kann es vorteilhaft sein, zur Verbesserung der Verträglichkeit Phosphorsäureester in Mischung mit den genannten Weichmachern einzusetzen.

Besonders bevorzugt sind die genannten Ester des Triethylenglykols.

Daneben können auch andere Weichmacher, wie z. B. Adipinsäure- und Sebazinsäureester sowie

Phosphorsäureester allein oder in Abmischungen verwendet werden.

Die Konzentration an Weichmacher im Polymerisat/Weichmachergemisch kann zwischen 20 und 40 Gew.-% liegen, vorzugsweise zwischen 25 und 35 Gew.-%. Besonders bevorzugt sind Weichmacherkonzentrationen von 27-32 Gew.-%. Bei zu niedrigen Weichmacherkonzentrationen kann die Verarbeitbarkeit der Gemische beeinträchtigt werden, bei zu hoher Weichmacherkonzentration wird häufig die erforderliche Folienfestigkeit nicht mehr erreicht.

Das Polymerisat/Weichmachergemisch kann neben den beanspruchten Antihaftmitteln auch andere Antihaftmittel, wie die bekannten Kalium- oder Magnesiumsalze sowie Betaine und Lecithin, ferner weitere übliche Zusätze, wie z. B. Stabilisatoren und Antiblockmittel in üblichen Konzentrationen, z. B. zwischen 0,01 und 1 Gew.-%, bezogen auf das Gemisch, enthalten.

Polymerisat, Weichmacher und Zusätze können in bekannter Weise auf einem Kalander oder in einem Extruder zu vorzugsweise 0,3-1,5 mm dicken Folien verarbeitet werden.

Die fertige Glasverbundfolie wird, gegebenenfalls nach Klimatisierung, die erforderlich ist, um den Wassergehalt der Folie auf ca. 0,2.-0,8 Gew.-% einzustellen, in üblicher Weise mit Glasscheiben zum Verbund verarbeitet. Die Einstellung des Wassergehalts ist wünschenswert, weil sie die Glashaftung zusätzlich erniedrigt. Damit bei der Verarbeitung keine Blasenbildung eintritt, sollte die angegebene Wasserkonzentration zweckmäßigerweise nicht überschritten werden.

Bei der Glasverbundherstellung wird die Folie beispielsweise zwischen 1 bis 3 mm dicke Glasscheiben gelegt und bei 60-100 °C zu einem Vorverbund verpreßt. Daraus wird, z. B. in einem Autoklaven bei 120-160 °C und 8-16 bar, der Endverbund hergestellt. Bei den in den nachstehenden Beispielen beschriebenen Versuchen wurden die Glasplatten vor der Verbundherstellung mit entsalztem Wasser gewaschen.

Zur Qualitätsprüfung kann der Glasverbund einem umfangreichen Testprogramm unterworfen werden.

Zur Beurteilung der Verbundqualität, insbesondere der Glashaftung, wird häufig der sogenannte Pummeltest herangezogen. Dabei wird ein Glasverbund auf — 18 °C abgekühlt, auf eine Metallunterlage gelegt und mit einem 500 g schweren Hammer zerschlagen. Entsprechend der Glasmenge, die sich dabei von der Folie ablöst, wird der Verbund mit Pummelwerten zwischen 0 (keine Haftung) und 10 (vollständige Haftung) bewertet. Eine Beschreibung des Tests findet sich in der GB-PS 1 093 846.

Sehr gut läßt sich die Glashaftung mit einem Schertest ermitteln, der in der DE-OS 3 038 449 beschrieben ist. Bei den in den nachstehenden Beispielen durchgeführten Messungen werden Verbundstreifen aus 3 mm dicken, mit entsalztem Wasser gewaschenem Floatglas und Polyvinylbutyralfolien der in den Beispielen angegebenen Dicke verwendet. Die Streifen haben eine Abmessung von ca. 100 × 15 mm, die zu scherende Verbundfläche, die vor jedem Zugversuch genau ausgemessen wird, eine solche von ca. 15 × 7 mm.

Die Verbundstreifen werden in einem handelsüblichen Gerät der Firma Instron mit einer Geschwindigkeit von 20 cm/min. gerissen.

Die optimale Scherfestigkeit, deren Einstellung zu schlagfesten Glasverbunden führt, liegt im allgemeinen zwischen 1,5 und 5 $N/mm^2$, vorzugsweise zwischen 2 und 4 $N/mm^2$. Ein besonders bevorzugter Bereich liegt zwischen 2,5 und 3,5 $N/mm^2$. Hochfeste Folien können dabei unbeschadet etwas höhere Scherfestigkeiten aufweisen als weniger feste Folien. Dies verringert gleichzeitig die Gefahr des Absplitterns von Glas beim Bruch.

Die für die Praxis wichtigste Testmethode ist der Kugelfalltest nach DIN 52306 (dynamische Methode). Hierzu werden ca. 30 × 30 cm große Glasverbunde aus zwei 3 mm dicken Floatglasscheiben und ca. 0,8 mm dicken, weichmacherhaltigen Polyvinylbutyralfolien hergestellt. Von den Verbunden wird mit einer 2,26 kg schweren Stahlkugel die mittlere Bruchhöhe bestimmt, das ist die Höhe, bei der die Hälfte der geprüften Scheiben durchschlagen wird.

Die Erfindung wird durch die nachfolgenden Beispiele näher erläutert :

## Beispiel 1

Eine Polyvinylbutyral/Weichmacher-Mischung, bestehend aus

71,0 Gew.-% Polyvinylbutyral, das einen Gehalt von 20,7 Gew.-% Vinylalkoholeinheiten und eine Viskosität bei 23 °C, 5 gew.-%ig in Ethanol, von 71 mPa.s aufweist,

28,45 Gew.-% Bis-heptansäuretriethylenglykolester

0,05 Gew.-% Magnesiumpentadecylsulfonat und

0,5 Gew.-% Methanol

wird wie folgt hergestellt :

Es wird zunächst das Magnesiumsalz in Methanol gelöst, die erhaltene Lösung mit dem Weichmacher vermischt und das Polyvinylbutyral zugegeben. Dann wird das Gemisch innig vermischt. Auf übliche Weise wird aus der resultierenden Mischung eine 0,8 mm dicke Extrusionsfolie hergestellt. Verbunde, aus 2 Platten von 3 mm dickem Floatglas und dieser Folie hergestellt, besitzen folgende Eigenschaften :

Scherfestigkeit = 2,8 $N/mm^2$, Pummeltest = 5, mittlere Bruchhöhe = 6,9 m. Eine Folie aus denselben Komponenten, jedoch ohne den Antihaftmittelanteil, hat eine Scherfestigkeit von 7,3 $N/mm^2$, Pummeltest = 10 und mittlere Bruchhöhe = 3,6 m.

## Beispiel 2

Auf das in Beispiel 1 beschriebene Polymerisat werden aus 2 gew.-%iger wäßriger Lösung 0,1 Gew.-% Mg-dodecylbenzolsulfonat (bezogen auf die Mischung aus Polymerisat und Weichmacher) aufgetrocknet. Als Weichmacher wird ein Gemisch aus 8 Gewichtsteilen Dioctylphthalat und 2 Gewichtsteilen Trioctylphosphat eingesetzt. Von dieser Mischung wird, wie in Beispiel 1 beschrieben, eine 0,8 mm dicke Extrusionsfolie hergestellt, die 29,5 Gew.-% Weichmacher enthält. Daraus analog Beispiel 1 hergestellte Glasverbunde haben eine mittlere Bruchhöhe von 7,1 m.

## Beispiel 3

0,02 Gew.-% (bezogen auf das Polymerisat/Weichmachergemisch) Mg-dodecylbenzolsulfonat werden unter Erwärmen in Triethylenglykol-bis-2-ethylbuttersäureester gelöst. 29 Gewichtsteile dieser Weichmacherlösung werden mit 71 Gewichtsteilen des in Beispiel 1 beschriebenen Polyvinylbutyrals zu einer 0,8 mm dicken Extrusionsfolie verarbeitet, wobei die Extrusionstemperatur bei der Herstellung der Folie bis auf 230 °C gesteigert wird. Die Scherfestigkeit eines Glasverbundes aus dieser Folie wird durch den Zusatz des Antihaftmittels von 5,7 auf 3,7 N/mm$^2$ erniedrigt, die mechanischen Eigenschaften der Folie, insbesondere die Zugfestigkeit, werden durch den Antihaftmittelzusatz nicht beeinträchtigt.

## Beispiel 4

Wie in Beispiel 1 beschrieben, wird folgende Polyvinylbutyral/Weichmachermischung hergestellt, bestehend aus :

72,0 Gew.-% Polyvinylbutyral, das 20,1 Gew.-% Vinylalkoholeinheiten enthält und, 5 gew.-%ig in Ethanol, bei 23 °C eine Viskosität von 80 mPa.s aufweist,

0,04 Gew.-% $[C_{12}H_{25}-(OCH_2-CH_2)_3-OSO_3]_2Mg$

0,36 Gew.-% Ethanol

27,6 Gew.-% Triethylenglykol-bis-2-ethylbuttersäureester.

Aus der Mischung hergestellte Folien ergeben Glasverbunde, die klar und nicht verfärbt sind und die im Kugelfalltest eine mittlere Bruchhöhe von 6,9 m haben.

## Beispiel 5

Zu 100 g Triethylenglykol-bis-2-ethylbuttersäureester werden 2 g einer 5 gew.-%igen Lösung von Mg-dodecylbenzolsulfonat in Methanol gegeben. Nach einer Lagerungsdauer von 20 Tagen bei 40 °C ist diese Lösung völlig klar und in ihrer Wirksamkeit als Antihaftmittel unverändert.

Wird das erfindungsgemäße Magnesiumsalz vergleichsweise durch das bekannte Antihaftmittel Kaliumformiat ersetzt, so treten bereits nach kurzer Zeit Abscheidungen aus dem Weichmacher auf und die Wirksamkeit der Mischung als Antihaftmittel geht zurück.

## Patentansprüche

1. Verfahren zur Reduzierung der Glashaftung von thermoplastischen, weichmacherhaltigen Polyvinylbutyralformmassen durch Vermischen der Formmassenbestandteile mit einem Antihaftmittel aus der Gruppe der Magnesiumsalze, dadurch gekennzeichnet, daß man als Antihaftmittel das Magnesiumsalz einer Sulfonsäure oder eines Schwefelsäurehalbesters oder Gemische dieser Verbindungen einsetzt.

2. Verfahren nach Anspruch 1, dadurch gekennzeichnet, daß man das Magnesiumsalz in einer Menge von 0,003 bis 0,3 Gew.-%, bezogen auf das weichmacherhaltige Polyvinylbutyral, einsetzt.

3. Verfahren nach Ansprüchen 1 und 2, dadurch gekennzeichnet, daß man das Antihaftmittel, gegebenenfalls unter Mitverwendung eines Lösungsmittels bzw. Löslichkeitsvermittlers, im Weichmacher gelöst einsetzt.

4. Verfahren nach Ansprüchen 1 bis 3, dadurch gekennzeichnet, daß man das Magnesiumsalz zusammen mit anderen üblichen Antihaftmitteln und gegebenenfalls weiteren üblichen Zusatzstoffen einsetzt.

5. Verfahren nach Ansprüchen 1 bis 4, dadurch gekennzeichnet, daß die Formmasse eine Folie ist.

6. Weichmacherhaltige Polyvinylbutyralfolien mit reduzierter Glashaftung, hergestellt nach Anspruch 5.

7. Verwendung weichmacherhaltiger Polyvinylbutyralfolien mit reduzierter Glashaftung nach Anspruch 6 zur Herstellung von Glasverbunden.

8. Glasverbunde, enthaltend weichmacherhaltige Polyvinylbutyralfolie mit reduzierter Glashaftung nach Anspruch 6 als Verbundschicht.

## Claims

1. A process for reducing the adhesion to glass of thermoplastic, plasticized polyvinylbutyral molding compositions by mixing the constituents of the molding compositions with a non-stick agent belonging to the group of magnesium salts, which comprises employing, as the non-stick agent, the magnesium salt of a sulfonic acid or of a sulfuric acid half-ester or mixtures of these compounds.

2. The process as claimed in claim 1, wherein the magnesium salt is employed in an amount of 0.003 to 0.3 % by weight, relative to the plasticized polyvinylbutyral.

3. The process as claimed in claim 1 and 2, wherein the non-stick agent is employed in the form of a solution in the plasticizer, if appropriate with the concomitant use of a solvent or solubilizer.

4. The process as claimed in any of claims 1 to 3, wherein the magnesium salt is employed together with other customary non-stick agents and, if appropriate, further customary additives.

5. The process as claimed in any of claims 1 to 4, wherein the molding composition is sheeting.

6. Plasticized polyvinylbutyral sheeting having a reduced adhesion to glass and produced as claimed in claim 5.

7. The use of plasticized polyvinylbutyral sheeting having a reduced adhesion to glass as claimed in claim 6 for the production of glass laminates.

8. Glass laminates containing plasticized polyvinylbutyral sheeting having a reduced adhesion to glass as claimed in claim 6 as the laminating layer.

## Revendications

1. Procédé pour diminuer l'adhérence au verre de matières à mouler thermoplastiques en un polyvinylbutyral contenant un plastifiant, par mélangeage des constituants de ces matières avec un agent destiné à abaisser l'adhérence, de la famille des sels de magnésium, procédé caractérisé en ce que l'on utilise comme tel agent le sel de magnésium d'un acide sulfonique ou d'un semi-ester de l'acide sulfurique ou un mélange des deux.

2. Procédé selon la revendication 1 caractérisé en ce que la proportion du sel de magnésium est de 0,003 à 0,3 % du poids du polyvinylbutyral plastifié.

3. Procédé selon la revendication 1 ou 2 caractérisé en ce que l'on utilise l'agent contre l'adhérence dissous dans le plastifiant, éventuellement en ayant recours à un solvant ou à un adjuvant de mise en solution.

4. Procédé selon l'une quelconque des revendications 1 à 3, caractérisé en ce qu'on utilise le sel de magnésium conjointement avec d'autres agents courants pour diminuer l'adhérence et le cas échéant d'autres additifs courants.

5. Procédé selon l'une quelconque des revendications 1 à 4, caractérisé en ce que la matière à mouler est sous la forme d'une feuille.

6. Feuilles de polyvinylbutyral plastifié ayant une adhérence au verre réduite, qui ont été formées suivant la revendication 5.

7. Emploi de feuilles en polyvinylbutyral plastifié qui ont une adhérence au verre réduite, suivant la revendication 6, pour fabriquer des composites de verre.

8. Composites de verre qui comprennent une feuille en polyvinylbutyral plastifié à adhérence au verre réduite suivant la revendication 6, comme feuille de liaison.